# EUROPÄISCHE PATENTSCHRIFT

(11) **EP 0 554 815 B1**
(45) Veröffentlichungstag und Bekanntmachung des Hinweises auf die Patenterteilung: **03.09.1997**
(21) Anmeldenummer: 93101477.3
(22) Anmeldetag: 30.01.1993
(51) Int. Cl.: B41F 27/12

(54) **Zuführeinrichtung für druckbeaufschlagbare Medien auf rotierbare Körper, vorzugsweise Zylinder in Druckmaschinen**
Apparatus for supplying compressible fluid to a rotative member, preferably a cylinder in a printing machine
Dispositif d'amenée d'un fluide sous pression sur un corps rotatif, de préférence un cylindre de machine d'impression

(30) Priorität: 07.02.1992 DE 4203550
(43) Veröffentlichungstag der Anmeldung: 11.08.1993
(73) Patentinhaber: KOENIG & BAUER-ALBERT AKTIENGESELLSCHAFT, 97080 Würzburg (DE)
(72) Erfinder: Dürr, Reinhold, Dr.-Ing., W-8700 Würzburg (DE)

(56) Entgegenhaltungen:
- DE-A- 3 833 684
- JP-A- 5 919 156
- US-A- 4 005 653

## Beschreibung

Die Erfindung betrifft eine Zuführung zum Beaufschlagen von Druckmittelleitungen auf rotierbaren Körpern gemäß dem Oberbegriff des Patentanspruches 1.

Eine gattungsgemäße Zuführung zum Beaufschlagen von Druckmittelleitungen auf rotierbaren Körpern mit einem durch druckbeaufschlagten Medium ist durch die JP-A-59 19 156 bekanntgeworden. Die Zuführung hat einen gestellfesten Einlaß und einen mit einem Ende der Druckmittelleitung in Überdeckung bringbaren Auslaß für das druckbeaufschlagte Medium. Der Auslaß ist bogenförmig gestaltet und überdeckt das sich radial erstreckende Ende der Druckmittelleitung. Das Ende der Druckmittelleitung mündet in einer Seitenscheibe des rotierbaren Körpers.

Die DE 38 33 684 A1 zeigt eine Drehzuführung zum Beaufschlagen von Druckräumen von umlaufenden Systemen mit einem druckbeaufschlagbaren Medium. Ein drehbarer Zapfen des Trägers der Systeme weist Zuführkanäle auf, die zu den Druckräumen führen. Die Zuführkanäle sind mit vom Umfang des Zapfens her zugänglichen Zuführöffnungen versehen. Die Mediumzufuhr erfolgt über eine gestellfeste Zuführung mit Einspeiseeinrichtung und Anschluß mit Öffnung. Die Öffnung des Auslasses und die Zuführöffnung sind in Überdeckung bringbar.

Aus der EP-OS 02 15 645 sowie der US-PS 40 05 653 ist es bekannt, bei Druckwerkszylindern über die Achse des Zylinders Luft zuzuführen bzw. abzusaugen, beispielsweise um Druckplatten am Umfang eines Formzylinders über Kanäle oder dergleichen Öffnungen festzuhalten.

Solche Lösungen sind jedoch dann nicht einsetzbar, wenn der Formzylinder eine Umfangs- und Seitenregistereinstellung aufweist, welche zur Betätigung Hilfsmittel erfordern, die durch Bohrungen in der Rotationsachse beider Achszapfen führen.

Darüberhinaus ist es gemäß oben genannter Lösungen nur möglich, über die Rotationsachse eines Druckwerkszylinders eine Zuführleitung für ein flüssiges oder gasförmiges Medium einzubringen.

Der Erfindung liegt die Aufgabe zugrunde, eine Zuführeinrichtung für druckbeaufschlagbare Medien auf rotierbare Körper, vorzugsweise Zylinder in Druckmaschinen, mittels Druckluft über seine Wellenzapfen zu schaffen, mit der während des Stillstandes oder während der Bewegung des Zylinders verschiedene Stelleinrichtungen oder Antriebselemente druckmittelbeaufschlagbar sind.

Diese Aufgabe wird erfindungsgemäß durch das Kennzeichen des Patentanspruches 1 gelöst.

Bei der Anwendung der Erfindung treten insbesondere nachfolgende Vorteile auf. Durch die Druckmitteleinleitung in den Druckwerkszylinder über verschiedene, am Umfang angeordnete Zuführungen ist es möglich geworden, während der Bewegung des Zylinders oder während des Stillstandes desselben mehrere Stelleinrichtungen, beispielsweise Spannleisten, für einzelne Druckplatten eines Formzylinders oder dergleichen unabhängig voneinander zu betätigen. Als Druckmittel kann sowohl Luft als auch Öl Verwendung finden.

Darüberhinaus ist es auch möglich, die genannten Luftzuführungen mit Vakuum zu beaufschlagen, so daß auch eine Anzahl von Steuerungsmöglichkeiten bei Saugluftbeaufschlagung des Druckwerkszylinders gegeben sind.

Die Erfindung soll nachstehend an einem Ausführungsbeispiel näher erläutert werden. In den dazugehörigen Zeichnungen zeigen:
- Fig. 1: die schematische Darstellung eines Druckwerkszylinders mit Lagerzapfen, der in einer gestellfesten Aufnahme gelagert ist, auf der ein druckmittelbeaufschlagbares Ventil angeordnet ist;
- Fig. 2: den Schnitt II - II nach Fig. 1, jedoch mit gemeinsamer Darstellung des Wellenzapfens;
- Fig. 3: eine Darstellung gemäß Fig. 2, jedoch in Arbeitsstellung;
- Fig. 4: den Schnitt IV - IV nach Fig. 3;
- Fig. 5: eine Darstellung nach Fig. 2, jedoch mit einer zweiten Ausführungsvariante eines Ventils in Ruhestellung;
- Fig. 6: eine Darstellung nach Fig. 5, jedoch in Arbeitsstellung.

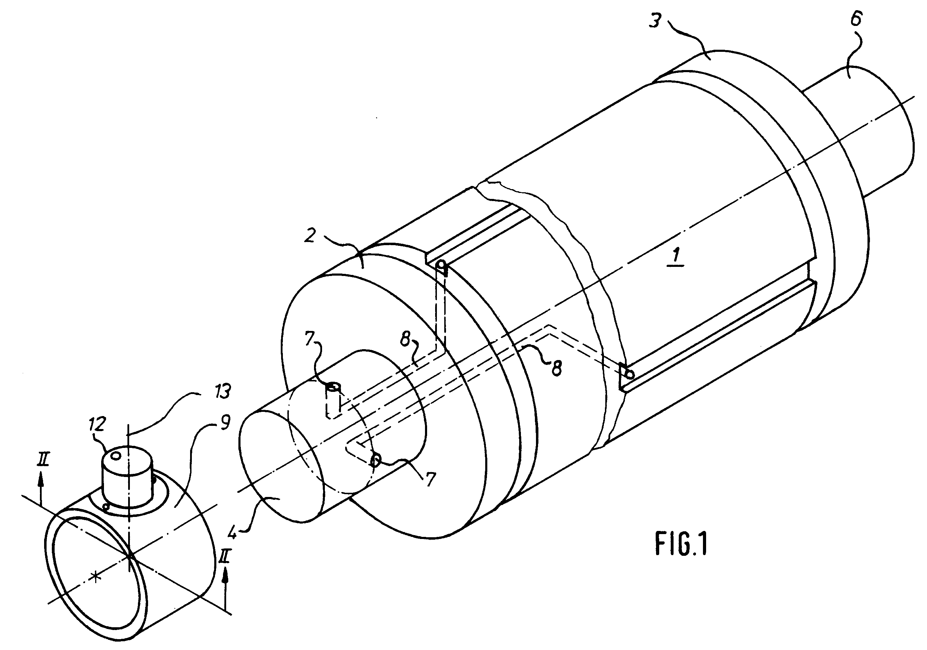

Gemäß Fig. 1 weist ein Druckwerkszylinder 1 beidseitig Schmitzringe bzw. Laufringe 2; 3 sowie gestellfest gelagerte Achszapfen 4 oder/und Achszapfen 6 auf. Der Achszapfen 4 besitzt radial an seinem Umfang verteilte Bohrungen 7, beispielsweise acht Stück. Diese Bohrungen 7, die zunächst radial verlaufen, münden nach einem kurzen Weg in axial verlaufende Bohrungen 8. Diese Bohrungen 7; 8 bilden Druckmittelleitungen, die zu nicht dargestellten Stellelementen führen. Die Erfindung kann jedoch auch bei laufringlosen Druckwerkszylindern Anwendung finden.

Der Druckwerkszylinder 1 kann beispielsweise auch als Formzylinder ausgeführt sein; und die Druckmittelleitungen führen zu nicht dargestellten Stellelementen, die Spannleisten zum Halten von biegsamen Druckplatten betätigen können.

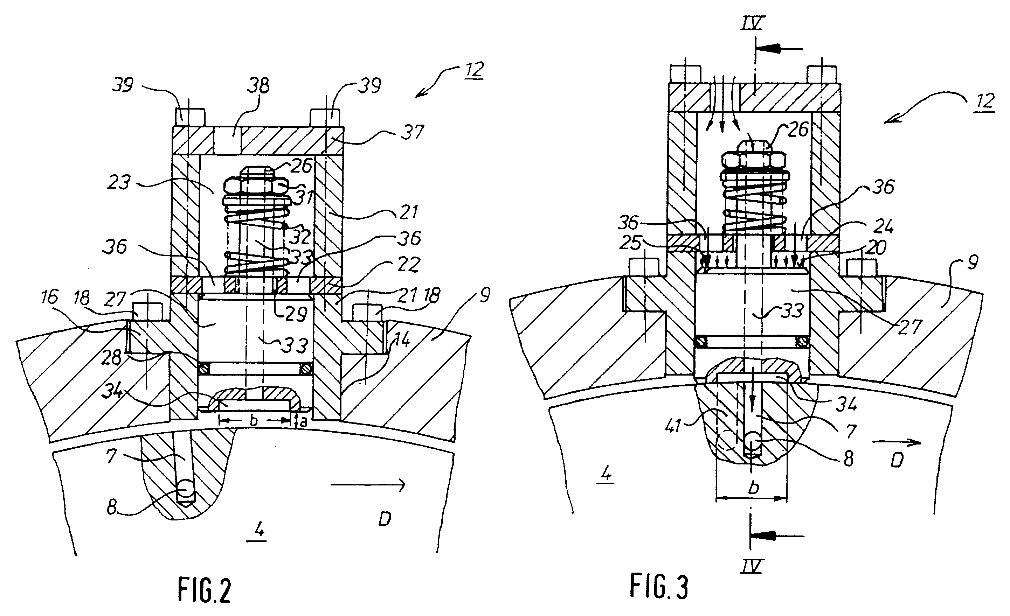

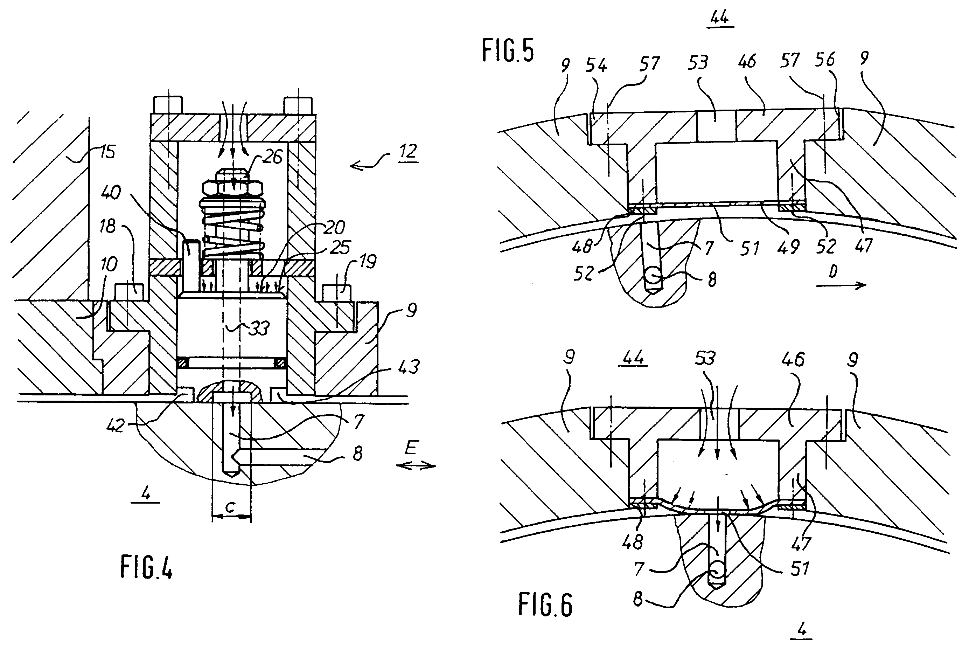

Neben dem Achszapfen 4 ist eine rohrförmige Aufnahme 9 dargestellt. Die ringförmige Aufnahme 9 ist an einer nicht dargestellten Lagerbüchse festgeschraubt, welche in einem nicht dargestellten Seitengestell der Maschine gehalten ist. Außen auf der Aufnahme 9 befindet sich eine druckmittelbeaufschlagbare Zuführung 12, die in Fig. 2 bis Fig. 4 näher beschrieben wird. Es kann auch ein Ventil 44 eingesetzt werden, das in Fig. 5 und 6 dargestellt ist.

Im Betriebszustand befindet sich der Achszapfen 4 in der gestellfesten Aufnahme 9, und zwar so, daß die radialen Bohrungen 7 bei Drehung des Druckwerkszylinders 1 mit der Mittellinie 13 der Zuführung 12 fluchten, d. h. in einer Ebene liegen.

Gemäß Fig. 2 ist die Zuführung 12 in eine Öffnung 14 der rohrförmigen Aufnahme 9 eingelassen und ist mittels eines Flansches 16; und angedeuteten Schrauben 18; 19 mit der Aufnahme 9 verbunden. Die insgesamt mit 12 bezeichnete Zuführung besteht aus einem rohrförmigen Gehäuse 21, das durch eine konzentrisch angeordnete Scheibe 22 in zwei Räume geteilt ist; in einen oberen Raum 23, der eine Kolbenstange 26 aufnimmt, und in einen unteren Raum 24, der einen Kolben 27 aufnimmt.

Der Kolben 27 ist in dem Raum 24 um eine Hublänge a in radialer Richtung des Druckwerkszylinders 1 bewegbar und nimmt dann die Arbeitsstellung nach Fig. 3 und 4 ein. Der Kolben 27 besitzt einen an seinem Umfang verlaufenden Dichtring 28, der den Kolben 27 gegen die Innenwand des Gehäuses 21 abdichtet.

Am Kolbenboden 20 ist die Kolbenstange 26 befestigt, welche durch eine in der Scheibe 22 befindliche zentrische Bohrung 29 in den oberen Raum 23 ragt. Die Kolbenstange 26 weist an ihrem freien Ende ein Außengewinde mit Mutter 31 auf, wogegen eine zwischen der Mutter 31 und der Scheibe 22 angeordnete Druckfeder 32 drückt.

Die Kolbenstange 26 weist zentrisch eine in axialer Richtung verlaufende Bohrung 33 auf, die weiterhin in gleicher Richtung durch den Kolben 27 verläuft und am Kolbenboden 20, d. h. an seiner Stirnseite, in einem nutförmigen Auslaß 34 mit einer Nutlänge b endet. Gemäß Fig. 4 besitzt der Auslaß 34 eine Nutbreite c. Die besagte Stirnseite des Kolbens 27 mit dem Auslaß 34 fungiert als Gleitschuh auf dem Achszapfen 4 und ist diesem mit seiner Oberfläche angepaßt.

Die Scheibe 22 weist eine Anzahl konzentrisch angeordneter Bohrungen 36 auf, die um die zentrische Bohrung 29 verlaufen und welche den oberen Raum 23 mit dem unteren Raum 24 verbinden. Der obere Raum 23 wird durch einen Gehäusedeckel 37 mit Einlaß 38 abgeschlossen. Der Gehäusedeckel 37 sowie das Gehäuse 21 und die Scheibe 22 sind durch Gewindeschrauben 39 miteinander verbunden.

Der Kolben 27 weist an einer Stelle seines Bodens einen Führungsstift 40 auf, der parallel zur Kolbenstange 26 verläuft und durch eine der konzentrisch angeordneten Bohrungen 36 ragt. Der Führungsstift 40 dient als Verdrehsicherung für den Gleitschuh.

Die Funktionsweise der Einrichtung wird nachfolgend beschrieben.

Gemäß Fig. 2 bewegt sich der Druckwerkszylinder 1 in Pfeilrichtung D. Durch den Einlaß 38 wird beispielsweise Druckluft von einer nicht dargestellten Druckluftquelle zugeführt. Der Verlauf der Druckluft ist in den Fig. 3 und 4 durch kleine Pfeile angezeigt.

Nachdem der Druckwerkszylinder 1 gemäß Fig. 3 die Position 41 als gestrichelte Darstellung der Bohrungen 7; 8 erreicht hat, ist auch der Kolben 27 um den Betrag der Hublänge a in Richtung Druckwerkszylinder 1 vorgerückt und wirkt auf der Oberfläche des Achszapfens 4 als Gleitschuh mit abdichtender Funktion.

Die in den oberen Raum 23 eingeströmte Druckluft strömt dabei einerseits durch die konzentrischen Bohrungen 36 und drückt auf den Boden des Kolbens 27, der sich entgegen der Kraft der Druckfeder 32 und der Reibung des Kolbens 27 und des Dichtringes 28 an der Innenwand des unteren Raumes 24 um die Hublänge a bewegt. Andererseits dringt die zugeführte Luft in die Bohrung 33 der Kolbenstange 26 ein und gelangt über die Nut 34 zu der durch die Bohrungen 7; 8 ausgebildeten Druckmittelleitung zwecks Betätigung von nicht dargestellten Stellorganen.

Aufgrund der Drosselwirkung der Bohrung 33 baut sich bei Luftzufuhr im Raum 23 und über die Bohrung 36 auch im Raum 24 ein Überdruck auf, wodurch der Kolben 27 aus seiner Ruhelage bewegt wird.

Druckmittelleitung dauert während der Drehbewegung des Druckwerkszylinders 1 solange, bis die Nut mit der Länge b außer Kontakt kommt mit der radialen Bohrung 7. Diese Luftzuführung kann auch durch nicht dargestellte Mittel, beispielsweise durch ein Ventil, unterbrochen werden.

Um die Leckageverluste gering zu halten, ist eine Mindestpressung zwischen Gleitschuh und Oberfläche des Achszapfens 4 erforderlich. Durch seitliche Ausnehmungen 42; 43 an der Stirnseite des Kolbens 27 gemäß Fig. 4 ist gesichert, daß die Fläche des Gleitschuhs geringer ist als die druckmittelbeaufschlagte Bodenfläche 25 des Kolbens 27, so daß sich eine entsprechende Fugenpressung mit ausreichender Dichtwirkung einstellt.

Nun dreht sich der Druckwerkszylinder 1 weiter in Pfeilrichtung D, um mit der nächsten Bohrung 7 - wie in Fig. 1 dargestellt - in Kontakt zu kommen, die als beaufschlagte Druckmittelleitung ebenfalls eine andere Stellbewegung auslöst. Solche Stellbewegungen können beispielsweise zum Betätigen von Spannleisten für Druckplatten dienen, falls der Druckwerkszylinder 1 als Formzylinder ausgeführt ist.

Die Breite c der Nut 34 ist gemäß Fig. 4 größer als die Bohrung 7. Dies ist insbesondere dann von Vorteil, wenn der Druckwerkszylinder 1 als Formzylinder ausgeführt ist und infolge von Registerverstellungen in axialer Richtung gemäß Pfeil E eine Bewegung erfährt und dadurch bedingt nicht an eine eindeutige axiale Lage fixiert ist.

Als Medium für das Druckmittel kann sowohl Luft als auch Öl Verwendung finden.

Es ist auch möglich, das Ventil 12 dann einzusetzen, wenn durch die Bohrungen 7; 8 Saugluft gefördert wird, d. h. wenn der Druckwerkszylinder 1 mit Saugluft beaufschlagt wird. Für diesen Fall wird eine nicht dargestellte Saugluftleitung an die Bohrung 33 der Kolbenstange 26 angeschlossen. Durch den Einlaß 38 wird nach wie vor Druckluft zugeführt, um den Kolben 27 um die Hublänge a zu betätigen.

Gemäß Fig. 5 ist eine zweite Ausführungsvariante einer insgesamt mit 44 bezeichneten Zuführung in Ruhestellung und nach Fig. 6 in Arbeitsstellung dargestellt.

Die insgesamt mit 44 bezeichnete Zuführung besteht aus einem topfartigen Gehäuse, welches einen Boden 46, eine zylinderförmig verlaufende Seitenwand 47 und einen Rand 48 aufweist. Unterhalb seines Randes 48 ist das Gehäuse mit einem scheibenförmigen Verschluß 49 aus elastischem Material, beispielsweise Gummi, versehen. Der Verschluß 49 besitzt eine zentrisch angeordnete Öffnung als Auslaß 51 und kann zwischen der Seitenwand 47 und dem Rand 48 mittels Schrauben 52 befestigt sein. Der Boden 46 weist einen Einlaß 53 für das Druckmittel sowie zwei Laschen 54; 56 auf. Die Laschen 54; 56 sind mittels Gewindeschrauben 57 auf der rohrförmigen Aufnahme 9 befestigt. Die Aufnahme 9 ist fest am nicht dargestellten Maschinengestell angebracht.

Im Betriebszustand nach Fig. 6 wird durch den Einlaß 53 Druckluft eingebracht, die im Innenraum des Gehäuses einen Überdruck aufbaut. der elastische Verschluß 49 wölbt sich in Richtung Achszapfen 4. Die Öffnung 51 kommt zur Anlage mit einer der Bohrungen 7, nachdem sich der Achszapfen 4 gemäß Pfeilrichtung D bewegt hat. Die Druckluft wird über die Bohrungen 7; 8 als Druckmittelleitung weitergeführt zu nicht dargestellten Betätigungsorganen des Druckwerkszylinders 1 nach Fig. 1.

Der Auslaß 51 ist größer als der Durchmesser der Bohrungen 7, so daß während der Bewegung des Achszapfens 4 in Pfeilrichtung D analog den Fig. 3 und 4 eine Dimensionierung der Öffnung 51 in Richtung a und b erfolgt.

Nach Abfall der Druckluftzufuhr erfolgt die selbsttätige Rückstellung durch die Rückstellkräfte des elastischen Verschlusses 49 in die Lage nach Fig. 1. Die Dichtung zwischen Verschluß 49 und der Oberfläche des Achszapfens 4 erfolgt nahezu verlustlos.

Als Druckmittel kann auch eine Flüssigkeit, beispielsweise Öl, eingesetzt werden.

### Teileliste

- 1: Druckwerkszylinder
- 2: Laufring; Schmitzring
- 3: Laufring; Schmitzring
- 4: Wellenzapfen
- 5: -
- 6: Wellenzapfen
- 7: Bohrung, radial
- 8: Bohrung, axial
- 9: Aufnahme, rohrförmig
- 10: -
- 11: -
- 12: Zuführung
- 13: Mittellinie
- 14: Öffnung
- 15: -
- 16: Flansch
- 17: -
- 18: Schraube
- 19: Schraube
- 20: Kolbenboden
- 21: Gehäuse
- 22: Scheibe
- 23: Raum, oberer
- 24: Raum, unterer
- 25: Bodenfläche (27)
- 26: Kolbenstange
- 27: Kolben
- 28: Dichtring
- 29: Bohrung, zentrisch (22)
- 30: -
- 31: Mutter
- 32: Druckfeder
- 33: Bohrung (26; 27)
- 34: Auslaß
- 35: -
- 36: Bohrungen, konzentrisch (22)
- 37: Gehäusedeckel
- 38: Einlaß
- 39: Gewindeschrauben
- 40: Führungsstift
- 41: Position (7; 8)
- 42: Ausnehmung
- 43: Ausnehmung
- 44: Zuführung
- 45: -
- 46: Boden
- 47: Seitenwand
- 48: Rand
- 49: Verschluß
- 50: -
- 51: Auslaß
- 52: Schraube
- 53: Einlaß
- 54: Lasche
- 55: -
- 56: Lasche
- 57: Schraube
- a: Hublänge
- b: Nutlänge (34)
- c: Nutbreite
- D: Bewegungsrichtung
- E: Bewegungsrichtung

## Patentansprüche

1. Zuführung (12; 44) zum Beaufschlagen von Druckmittelleitungen (7, 8) auf über Achszapfen rotierbar gelagerten Körpern (1) mit einem druckbeaufschlagbaren Medium, wobei die Zuführung (12; 44) gestellfest gelagert ist und mindestens einen gestellfesten Einlaß (38; 53) und mindestens einen mit einem Ende (7) der Druckmittelleitung (7, 8) in Überdeckung bringbaren Auslaß (34; 51) für das druckbeaufschlagte Medium aufweist, dadurch gekennzeichnet, daß der Auslaß (34; 51) in Richtung Ende (7) der Druckmittelleitungen (7, 8) senk- und hebbar angeordnet ist und daß der Auslaß (34; 51) in Richtung Ende (7) der Druckmittelleitungen (7, 8) mittels des druckmittelbeaufschlagten Mediums selbst bei Beaufschlagung der Druckmittelleitungen (7, 8) hinbewegbar angeordnet ist, wobei die Enden der Druckmittelleitungen (7, 8) in die Umfangsoberfläche der mit dem Körper (1) rotierbaren Achszapfen des Körpers (1) münden.

2. Zuführung nach Patentanspruch 1, dadurch gekennzeichnet, daß die Zuführung (12) aus einem rohrförmigen Gehäuse (21) besteht, die durch eine konzentrisch angeordnete Scheibe (22) in einen oberen Raum (23) zur Aufnahme einer Kolbenstange (26) und einen unteren Raum (24) zur Aufnahme eines Kolbens (27) geteilt ist, daß die Scheibe (22) eine zentrisch angeordnete Bohrung (29) zwecks Durchführung der Kolbenstange (26) und einige auf einem konzentrischen Kreis angeordnete Bohrungen (36) aufweist, daß die Kolbenstange (26) eine axiale Bohrung (33) aufweist, die sich bis zur Stirnseite des Kolbens (27) erstreckt und dort in einer Öffnung (37) endet, daß zwischen dem Ende der Kolbenstange (26) und der Scheibe (22) eine Rückstellfeder (32) angeordnet ist und der obere Raum (23) durch einen Gehäusedeckel (37) mit einem Einlaß (38) abgeschlossen ist.

3. Zuführung nach den Patentansprüchen 1 und 2, dadurch gekennzeichnet, daß die Öffnung aus einem am Kolbenende in einem Gleitschuh angeordneten Auslaß (34) besteht.

4. Zuführung nach Patentanspruch 1, dadurch gekennzeichnet, daß die Zuführung (44) aus einem topfartigen Gehäuse (46,.47, 48) besteht, das an seiner Seitenwand (47) unterhalb seines Randes (48) einen scheibenförmigen Verschluß (49) aus elastischem Material mit einem zentrisch angeordneten Auslaß (51) und an seinem Boden (46) einen Einlaß (53) besitzt.

5. Zuführung nach den Patentansprüchen 1 und 4, dadurch gekennzeichnet, daß der scheibenförmige verschluß (49) zwischen dem Rand (48) des Gehäuses und der Seitenwand (47) befestigt ist.

6. Zuführung nach den Patentansprüchen 1, 4 und 5, dadurch gekennzeichnet, daß der Boden (46) des Gehäuses Befestigungslaschen (54; 56) aufweist.

7. Zuführung nach den Patentansprüchen 1 bis 6, dadurch gekennzeichnet, daß die Zuführung (12; 44) in einer auf dem Wellenzapfen (4; 6) angeordneten rohrförmigen Aufnahme (9) befestigt ist, daß die Aufnahme (9) mit einer gestellfesten Lagerbüchse verbunden ist.

8. Zuführung nach den Patentansprüchen 1 bis 6, dadurch gekennzeichnet, daß die Zuführung (12; 44) in einer auf dem Wellenzapfen (4; 6) angeordneten rohrförmigen Aufnahme (9) befestigt ist, daß die Aufnahme (9) mit einer gestellfesten Lagerbüchse drehbar verbunden ist.

9. Zuführung nach den Patentansprüchen 1 bis 3, dadurch gekennzeichnet, daß eine wirksame Fläche des Gleitschuhes (27, 34) kleiner ist als ein Boden (25) des druckluftbeaufschlagbaren Kolbens (27).

10. Zuführung nach den Patentansprüchen 1 bis 9, dadurch gekennzeichnet, daß der Auslaß (34) des Gleitschuhes (27, 34) sowie der Auslaß (51) der Zuführung (12; 44) in einer Ebene verlaufen mit den radial am Umfang des Achszapfens (4) angeordneten Bohrungen (7).

11. Zuführung nach den Patentansprüchen 1 bis 10, dadurch gekennzeichnet, daß die im Achszapfen (4; 6) verlaufenden radialen Bohrungen (7) am Umfang des Achszapfens (4; 6) fluchtend angeordnet sind.

## Claims

1. A supply means (12; 44) for acting upon compressed-medium lines (7, 8) on bodies (1), which are rotatably mounted via journals, with a compressible medium, the supply means (12; 44) being mounted secured to the frame and having at least one inlet (38; 53) which is secured to the frame, and at least one outlet (34; 51) which may be brought into coincidence with one end (7) of the compressed-medium line (7, 8), for the compressed medium, characterized in that the outlet (34; 51) is arranged such that it may be lowered and raised in the direction of the end (7) of the compressed-medium lines (7, 8), and in that the outlet (34; 51) is arranged such that, when the compressed-medium lines (7, 8) are acted upon, it may be moved in the direction towards the end (7) of the compressed-medium lines (7, 8) by means of the compressed medium itself, the ends of the compressed-medium lines (7, 8) leading into the peripheral surface of the journals of the body (1), which may be rotated with the body (1).

2. A supply means according to Claim 1, characterized in that the supply means (12) comprises a tubular housing (21) which is divided by a concentrically arranged plate (22) into an upper chamber (23) for receiving a piston rod (26) and a lower chamber (24) for receiving a piston (27), in that the plate (22) has a centrally arranged bore (29) for the purpose of guiding the piston rod (26) through and a number of bores (36) arranged in a concentric circle, in that the piston rod (26) has an axial bore (33) which extends as far as the end face of the piston (27) and ends there in an opening (37), and in that a resetting spring (32) is arranged between the end of the piston rod (26) and the plate (22), and the upper chamber (23) is closed by a housing cover (37) having an inlet (38).

3. A supply means according to Claims 1 and 2, characterized in that the opening comprises an outlet (34) arranged at the piston end in a sliding block.

4. A supply means according to Claim 1, characterized in that the supply means (44) comprises a cup-type housing (46, 47, 48) which has a plate-shaped closure (49), which is made of resilient material and has a centrally arranged outlet (51), at its side wall (47) below its edge (48), and an inlet (53) at its base (46).

5. A supply means according to Claims 1 and 4, characterized in that the plate-shaped closure (49) is secured between the edge (48) of the housing and the side wall (47).

6. A supply means according to Claims 1, 4 and 5, characterized in that the base (46) of the housing has securing lugs (54; 56).

7. A supply means according to Claims 1 to 6, characterized in that the supply means (12; 44) is secured in a tubular receiving means (9) arranged on the journal (4; 6), and in that the receiving means (9) is connected to a bearing bush secured to the frame.

8. A supply means according to Claims 1 to 6, characterized in that the supply means (12; 44) is secured in a tubular receiving means (9) arranged on the journal (4; 6), and in that the receiving means (9) is rotatably connected to a bearing bush secured to the frame.

9. A supply means according to Claims 1 to 3, characterized in that an operative surface of the sliding block (27, 34) is smaller than a base (25) of the piston (27) which may be acted upon by compressed air.

10. A supply means according to Claims 1 to 9, characterized in that the outlet (34) of the sliding block (27, 34) and the outlet (51) of the supply means (12; 44) run in a single plane with the bores (7) arranged radially at the periphery of the journal (4).

11. A supply means according to Claims 1 to 10, characterized in that the radial bores (7) running in the journal (4; 6) are arranged in alignment on the periphery of the journal (4; 6).

## Revendications

1. Moyen d'amenée (12 ; 44) pour alimenter en fluide sous pression des conduites de fluide sous pression (7, 8) sur des corps (1) montés en rotation à l'aide de tourillons, le moyen d'amenée (12 ; 44) étant solidaire du bâti et comportant, pour le fluide sous pression, au moins une entrée (38 ; 53) solidaire du bâti et au moins une sortie (34 ; 51) pouvant être amenée en coïncidence avec l'une des extrémités, (7), de la conduite de fluide sous pression (7, 8), caractérisé en ce que la sortie (34 ; 51) peut monter et descendre en direction de l'extrémité (7) des conduites de fluide sous pression (7, 8), et en ce que la sortie (34 ; 51) peut se déplacer en direction de l'extrémité (7) des conduites de fluide sous pression (7, 8) au moyen du fluide sous pression même lors de l'alimentation des conduites de fluide sous pression (7, 8), les extrémités des conduites de fluide sous pression (7, 8) débouchant dans la surface circonférentielle des tourillons appartenant au corps (1) et tournant avec lui.

2. Moyen d'amenée selon la revendication 1, caractérisé en ce que le moyen d'amenée (12) est constitué par un boîtier tubulaire (21) divisé par un disque concentrique (22) en une chambre supérieure (23) pour recevoir une tige de piston (26) et en une chambre inférieure (24) pour recevoir un piston (27), en ce que le disque (22) comporte un perçage centré (29) pour laisser passer la tige de piston (26) et plusieurs perçages (36) disposés sur un cercle concentrique, en ce que la tige de piston (26) comporte un perçage axial (33) qui s'étend jusqu'à la face frontale du piston (27) et se termine à cet endroit par un orifice (34), en ce qu'un ressort de rappel (32) est disposé entre l'extrémité de la tige de piston (26) et le disque (22), et la chambre supérieure (23) est obturée par un couvercle de boitier (37) pourvu d'une entrée (38).

3. Moyen d'amenée selon les revendications 1 et 2, caractérisé en ce que l'orifice est constitué par une sortie (34) pratiquée dans un patin de glissement à l'extrémité du piston.

4. Moyen d'amenée selon la revendication 1, caractérisé en ce que le moyen d'amenée (44) est constitué par un boîtier en forme de pot (46, 47, 48) qui comporte, contre sa paroi latérale (47), sous son bord (48), un moyen d'obturation en forme de disque (49) en matériau élastique pourvu d'une sortie centrée (51) et, sur son fond (46), une entrée (53).

5. Moyen d'amenée selon les revendications 1 et 4, caractérisé en ce que le moyen d'obturation en forme de disque (49) est fixé entre le bord (48) du boîtier et la paroi latérale (47).

6. Moyen d'amenée selon les revendications 1, 4 et 5, caractérisé en ce que le fond (46) du boîtier comporte des pattes de fixation (54 ; 56).

7. Moyen d'amenée selon les revendications 1 à 6, caractérisé en ce que le moyen d'amenée (12 ; 44) est fixé dans un logement tubulaire (9) disposé sur le tourillon (4 ; 6) de l'arbre, et en ce que le logement (9) est relié à un coussinet solidaire du bâti.

8. Moyen d'amenée selon les revendications 1 à 6, caractérisé en ce que le moyen d'amenée (12 ; 44) est fixé dans un logement tubulaire (9) disposé sur le tourillon (4 ; 6) de l'arbre, et en ce que le logement (9) est relié avec une possibilité de rotation à un coussinet solidaire du bâti.

9. Moyen d'amenée selon les revendications 1 à 3, caractérisé en ce qu'une surface utile du patin de glissement (27, 34) est plus petite qu'un fond (25) du piston (27) mis en pression.

10. Moyen d'amenée selon les revendications 1 à 9, caractérisé en ce que la sortie (34) du patin de glissement (27, 34) ainsi que la sortie (51) du moyen d'amenée (12 ; 44) se trouvent dans le même plan que les perçages (7) disposés radialement à la périphérie du tourillon (4).

11. Moyen d'amenée selon les revendications 1 à 10, caractérisé en ce que les perçages radiaux (7) pratiqués dans le tourillon (4 ; 6) débouchent à la périphérie dudit tourillon (4 ; 6).
